# EUROPEAN PATENT SPECIFICATION

(11) **EP 3 379 918 B1**
(45) Date of publication and mention of the grant of the patent: **16.10.2019**
(21) Application number: 16815675.0
(22) Date of filing: 23.11.2016
(51) Int. Cl.: A01G 9/22

(54) **SCREENSYSTEM AND GREENHOUSE**
SCHIRMSYSTEM UND GEWÄCHSHAUS
ÉCRAN ET SERRE

(30) Priority: 23.11.2015 NL 2015842
(43) Date of publication of application: 03.10.2018
(73) Proprietor: Verzuu Beheer B.V., 8071 RA Nunspeet (NL)
(72) Inventor: VERZUU, Daniel Jacobus Hendrikus Gabriel, 8071 RA Nunspeet (NL)
(74) Representative: Jacobs, Bart
(86) International application number: PCT/NL2016/050822
(87) International publication number: WO 2017/091067

(56) References cited:
- EP-A1- 1 774 847
- BE-A3- 1 019 668
- NL-A- 8 501 831

## Description

The present invention relates to a greenhouse with a screen system. The invention relates further to a screen system configured to be used with such a greenhouse.

Screen systems for greenhouses are known from the prior art. Such systems comprise sheets with which it is possible to control numerous climatic factors in a greenhouse, such as light, exit and entry of heat, and air humidity. Screens are also used to create a determined atmosphere, for instance in garden centres. For mounting of the sheets a greenhouse comprises a plurality of wires. A greenhouse more particularly comprises two networks of wires placed at different heights. The sheets extend here between the wire networks.

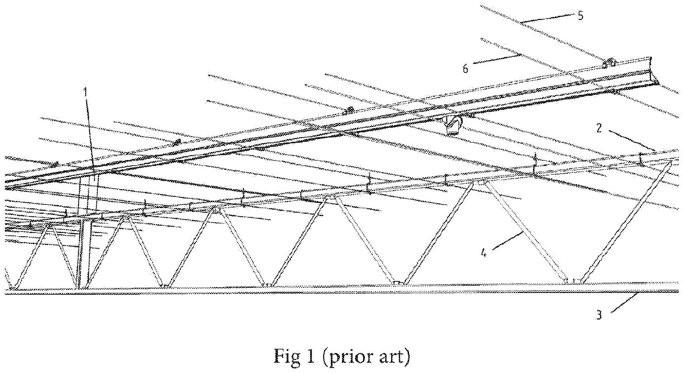

Figure 1 shows an example of a known greenhouse comprising a frame with a plurality of uprights 1 and transverse beams 2, 3 which are mutually connected by a latticework 4. It can further be seen that a first wire network formed by first wires 5 is situated higher than a second wire network formed by second wires 6. A sheet, which is not shown in figure 1, is situated between the first and second wire networks. First wires 5 serve here as restraining wires for limiting or preventing blowing upward of the sheet as a result of for instance the wind. The sheet can support on second wires 6, which serve as support wires.

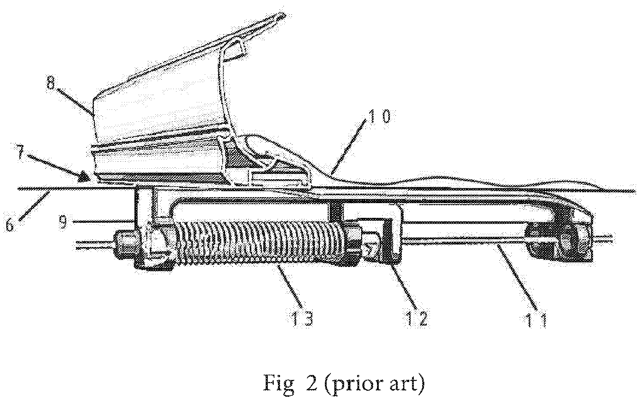

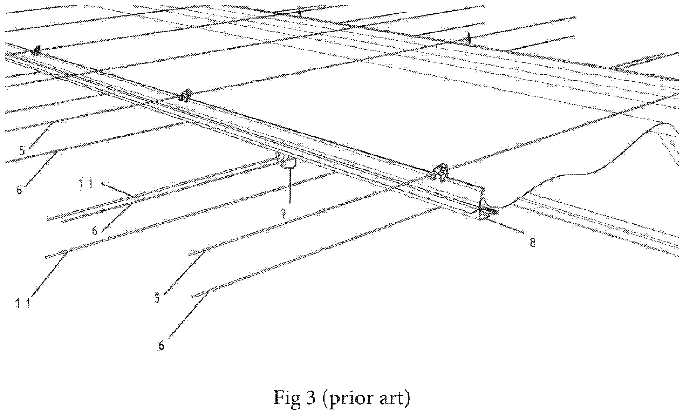

Figure 2 shows that an edge of a second side of a sheet 10 is attached to a profile 8 which supports on a second wire 6. Profile 8 is enclosed here between first wires 5 and second wires 6 as shown in figure 3, and can move therebetween. Sheet 10 is coupled on an opposite first side to the frame, such as to a transverse beam 2, 3. Profile 8 is provided on the underside with support wire guides (not shown) for guiding over second wires 6.

Profile 8 is coupled to a carrier 7 which comprises a sliding carriage 9 which can slide over a pull wire 11. Carrier 7 also comprises a connecting element 12 coupled slidably to sliding carriage 9 and connected fixedly to pull wire 11. A spring element 13 between sliding carriage 9 and connecting element 12 ensures that the position of profile 8, and thus also sheet 10, relative to connecting element 12 can vary.

In the existing system the amount of incident light can be controlled by extending sheet 10 by means of pulling pull wire 11. The known greenhouse generally comprises a shaft disposed centrally in the greenhouse at a right angle to the direction of movement of the sheet. Pull wire 11 extends between the end walls of the greenhouse, where the pull wire is carried back to the centrally disposed drive shaft by means of reversing wheels. Rotating this shaft enables the sheet to collapse or extend. Use can be made for this purpose of a drive system such as a motor.

An important aspect for a grower is the maximum amount of light which is available for the growth of crops. This amount is largely determined by the amount of light incident when the sheet is in collapsed state. It is known that a reduction of the maximum light incidence in percent results in a corresponding reduction in production. It is therefore a requirement for a screen system to block as little light as possible in the collapsed state.

In the known system shown in figure 1 use is made of a separate pull wire in addition to the above stated first and second wires. The pull wire is here usually fastened under the second wires. As a result of the placing of the carrier and the coupling of the carrier to the pull wire, the carrier is loaded asymmetrically in the sense that the carrier will tend to tilt relative to the pull wire in the case of a great tensile force on the pull wire, such as during collapsing of the sheet into a compact whole. In order to reduce the danger of the carrier and/or pull wire breaking due to fatigue, sliding carriage 9 has a long base in the known system. This long base however results in loss of light because this base protrudes out from under the package in the open position of the screen, and thus intercepts light thereby.

A greenhouse as defined by the preamble of claim 1 is known from EP 1774847A1. Further greenhouses are known from NL 8501831A and BE 1019668A3.

It is an object of the present invention to provide a screen system whereby the production loss due to a reduction in light incidence is reduced.

This object is achieved by means of a greenhouse with a screen system as defined in claim 1, which is characterized in that the carrier is coupled to one of the stated first wires and to one of the stated second wires, and that the drive system is configured to move the first wires and the second wires simultaneously in the same direction in order to thus collapse or pull out the sheet.

Applicant has determined that the maximum tensile force which can be exerted on the sheet is limited in the known system by the asymmetrical manner of driving the sheet profile, and that this has the result that the compactness of the sheet in collapsed state is likewise limited. In the known system, during compact collapsing of the sheet the available forces are more particularly no longer used to make the package smaller but to rotate the sheet profile, which is undesirable. The maximum tensile force is further limited in the known system in that the support wire guides shear on the second wires, which causes a lot of friction and therefore power loss, mainly during pressing of the sheet into a compact package, this resulting in larger packages.

According to the invention, the carrier is coupled to a first wire and to a second wire, and these wires are simultaneously moved in the same direction. In such a drive the load on the carrier is symmetrical and the carrier no longer tends to tilt, or hardly so. By using the first and second wires as pull wire a lot more force can be exerted on the sheet to be collapsed in more uniform manner and with less loss of light, since the known pull wire has been dispensed with. The sheet can hereby be collapsed into a more compact whole.

The compactness of the sheet in the collapsed state determines to significant extent the maximum light incidence into the greenhouse. The sheet can be collapsed more compactly and the maximum light incidence can be increased by the more symmetrical manner of driving according to the invention.

In the known system use is made of about 6 to 8 first and second stationary wires per 3 metres in a direction perpendicularly of the direction of movement of the sheet, while only 1 pull wire driving the sheet profile is used in this width. The distance between the carriers is thus relatively great, whereby the profile used for coupling to the edge of the sheet has to take a relatively large, rigid and expensive form with bending stiffness. In the present invention the mutual distance between carriers can be considerably smaller, i.e. equal to the mutual distance between the first wires relative to each other and/or the second wires relative to each other, whereby a more compact profile with less bending stiffness can be chosen or can even be dispensed with. This also increases the maximum light incidence.

In the known system the pull wire is fastened under the second wires so that the pull wire does not cause friction with the sheet or damage the sheet. There is however considerable friction between the moving sheet and the static first and second wires. A further advantage of the present invention is therefore that the friction between the sheet and the second wires, and thereby the wear of sheet and second wires, decreases because they both co-displace with the sheet.

Yet another advantage of the present invention is that, because the heavy sheet profile is absent or can take a lighter form, force is no longer required to displace this profile and all available force of the drive can be used for compact compression of the sheet. Nor, in the invention, is there any wear to the second wires, or hardly any, because a heavy sheet profile no longer slides thereover.

The coupling between the carrier and one of said first wires and/or the coupling between the carrier and one of said second wires is preferably a slipping connection or a fixed connection, which can also take a resilient form. In this latter embodiment the carrier is permanently connected to the first and/or second wires by means of a resilient element such as a spring. It is however also possible for this connection to take a rigid form.

The carrier is preferably attached to a single first wire and to a single second wire and/or the attachment points between the sheet and these wires are situated directly above each other.

The first wires and the second wires can respectively extend in a first and second plane, wherein the first and second wire network are configured to be attached to the frame at different heights and wherein the first and second plane are parallel planes, preferably horizontally extending planes. The first wires preferably form a first horizontal wire network which confines the sheet on the upper side. This can prevent the sheet coming loose from the frame and/or the profile as a result of wind. The second wires preferably form a second horizontal wire network which supports the sheet on the underside. It is possible here that the first plane is situated higher than the second plane and that an edge of the sheet is on the stated second side placed closer to the first plane than to the second plane.

In an embodiment the carrier extends substantially between the first and second wire.

The greenhouse can comprise a plurality of said carriers, which are each coupled to a different first and second wire on the second side of the sheet.

The screen system can comprise an edge profile which is coupled to an edge of the sheet and to the carrier(s). The carriers are hereby mutually coupled by the edge profile. The invention does not preclude the carriers being mutually coupled in other ways.

The carrier can comprise coupling parts for coupling the edge profile to the first and second wires. These coupling parts can comprise resilient elements. It is thus possible for the coupling parts to comprise first resilient elements extending in a plane under and parallel to the first plane and for the coupling parts to comprise second resilient elements extending in a plane above and parallel to the second plane, wherein the first resilient elements are coupled to a first wire and wherein the second resilient elements are coupled to a second wire. The resilient or sliding elements enable the attachment point to move relative to the first and second wire, preferably parallel to the first and/or second plane.

The elongation or extension of the first and second wires is compensated by this flexibility while the sheet is pulled on the pull side of the system, whereby the sheets lying closest to the drive shaft, for instance at the end wall, are compressed just as firmly as the other sheets. The first and second wires therefore do not become blocked locally, or hardly so, whereby the available movement and force of these wires reaches all other sheets. Instead of or in addition to the above stated resilient coupling parts, the coupling parts can also be mounted on the first and/or second wire or wires in slipping manner.

The coupling parts can further comprise a connecting part extending between the first and second resilient elements and coupled thereto. This connecting part is preferably not flexible, or hardly so, in order to maintain the rigidity of the carrier in the vertical direction.

The first and second resilient elements can extend on either side of respectively a first or second connecting point, at which point the first or second resilient elements are coupled to respectively the first or second wire.

The drive system can comprise a pair of shafts between which the first and second wires extend and to which shafts the first and second wires are connected, wherein the drive system is configured to rotate at least one shaft of the pair of shafts for said collapsing or pulling out. It is thus possible for the drive system to be configured to move every shaft simultaneously. Use can be made for this purpose of a central motor and a transmission from the central motor to each shaft. It is however also possible for the drive system to comprise a respective motor for each shaft, wherein the motors are configured to rotate the shafts in synchronized manner.

The drive system can also comprise a plurality of shafts, wherein each shaft winds up or unwinds either the first or the second wires.

According to the invention, the combination of central shaft and reversing wheel can be dispensed with. This halves the force on the end wall relative to the known system. There is hereby of course no more light interception of the reversing wheels, nor of the struts which serve to make the end wall of the greenhouse resistant to the relatively high load produced by a screen as a result of the normal wind load for which an end wall is equipped. There is further no more friction created by a reversing wheel. The end purlin to which the first and second wires are attached in the known system is also dispensed with in that according to the invention these wires are mounted directly on the drive shaft. This provides advantages in respect of the maximum light incidence and costs.

In an embodiment at least one shaft can translate in a longitudinal direction thereof. This can prevent the first and second wires being wound too close to each other. Said at least one shaft can be configured to simultaneously translate and rotate.

The greenhouse can further comprise a frame mounting part mounted on a transverse beam of the stated plurality of transverse beams or on an element coupled thereto, wherein the frame mounting part comprises on a side a first receptacle for receiving the sheet, wherein the sheet is fixedly connected on the stated first side to the first receptacle, preferably close to an underside of the receptacle, preferably in such a way that the attachment of the sheet need not be interrupted at the position of the upright. This frame mounting part can be provided at the position of an upright with a recess into which the upright falls. The frame mounting part can further comprise on an opposite side a second receptacle for receiving the second moving side of another sheet. The frame mounting part can in addition or instead comprise a downward extending guide for guiding the sheet to the first receptacle during a collapsing movement of the sheet. The part of the sheet which is coming to a standstill is hereby lifted from the moving second wires by the guide, whereby the friction between sheet and second wires is reduced. A similar guide can be provided for separating sheet and first wires. The guide can be embodied as a plurality of guide elements, these elements being arranged only at the position of the first and/or second wires.

The frame mounting part is preferably configured such that the first receptacle is placed substantially under the transverse beam after mounting of the frame mounting part on the transverse beam. This can achieve that the sheet is in collapsed state situated mainly under the transverse beam. There occurs no or hardly any additional loss of light in such a case, compared to the situation where no screen system is installed.

It is preferred for the screen system to comprise a plurality of said sheets, wherein each sheet is placed between a pair of adjacent transverse beams. Every sheet of the above stated plurality of sheets is collapsed or pulled out simultaneously as described above by moving the first and second wires.

The greenhouse can further comprise a gutter mounted on the frame for collecting rainwater, this gutter extending in a first direction. The screen system can be mounted here with the first and second wires parallel to or perpendicularly of the first direction.

According to a second aspect, the present invention provides a screen system as defined in claim 15. The screen system is configured here as described above. The invention does not preclude the screen system being used for darkening other buildings, in which case the screen system is coupled to a structural element of the building.

The present invention will be further discussed hereinbelow with reference to the accompanying figures, wherein:
Figures 1-3 show a known greenhouse with a known screen system;
Figures 4-6 show different views of an embodiment of a screen system according to the present invention; and
Figures 7 and 8 show a drive of the screen system of figures 4-6.

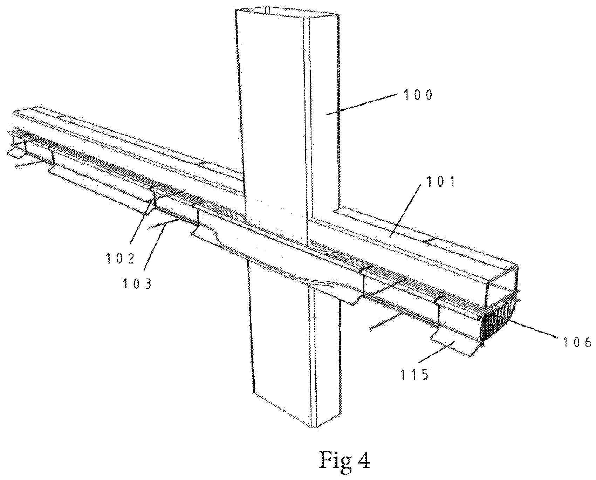

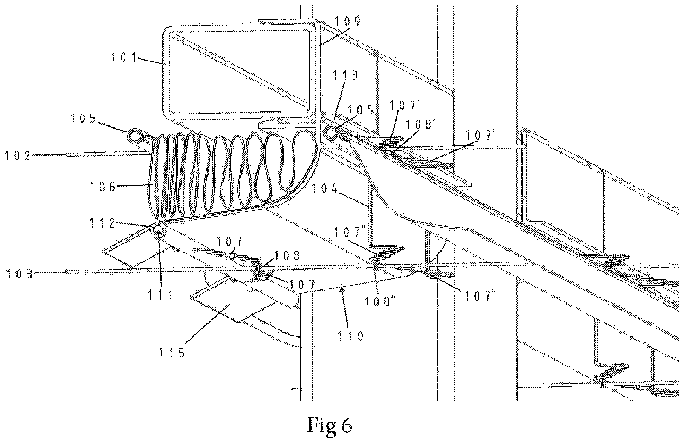

Figures 4-6 show different views of an embodiment of a screen system according to the present invention. This system is coupled to a frame of a greenhouse which comprises an upright 100 and a transverse beam 101. The screen system comprises first wires 102 and second wires 103. These wires are connected by means of carrier 104 to a profile 105 which is in turn coupled to an edge of a sheet 106.

Carrier 104 comprises coupling parts which provide for the coupling between profile 105 and first wires 102 and second wires 103. The coupling parts comprise here resilient elements extending on either side of a connecting point 108', 108". A first pair of resilient elements 107' extends in a plane directly under first wires and a second pair 107" in a plane directly above second wires 103. The pairs of resilient elements 107', 107" are mutually coupled by a connecting part 108. At the position of connecting points 108', 108" the coupling parts are connected to a first wire 102 or a second wire 103.

The screen system comprises a frame mounting part 109 which is mounted on transverse beam 101. Frame mounting part 109 can comprise a plastic part which is mounted on a transverse beam, for instance by means of a snap system.

Frame mounting part 109 comprises a first receptacle 110 for receiving sheet 106. Sheet 106 is fixedly connected on one side to first receptacle 110 by means of for instance a cavity 111 on the underside, in which an edge 112 of sheet 106 can be attached. Sheet 106 is connected on the other side to profile 105. This attachment is close to first wires 102.

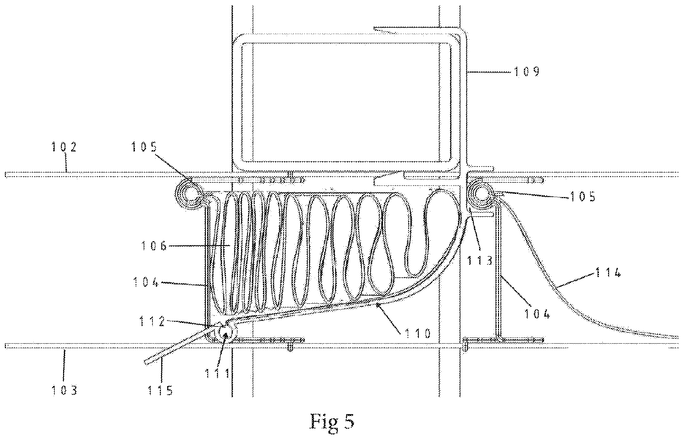

Figure 5 shows two sheets 106, 114, wherein left-hand sheet 106 is in the collapsed state and right-hand sheet 114 shows a part of a pulled-out sheet. It is noted here that this view serves only to illustrate. In practice the sheets will usually be used in the same state. This means that all sheets in the greenhouse are collapsed or pulled out, or are in a state therebetween.

Frame mounting part 109 comprises on another side a second receptacle 113 in which profile 105 of another sheet 114 is received. The sheets can in this way extend all the way between transverse beams.

Frame mounting part 109 further comprises a guide 115 which guides the sheet during a collapsing movement thereof.

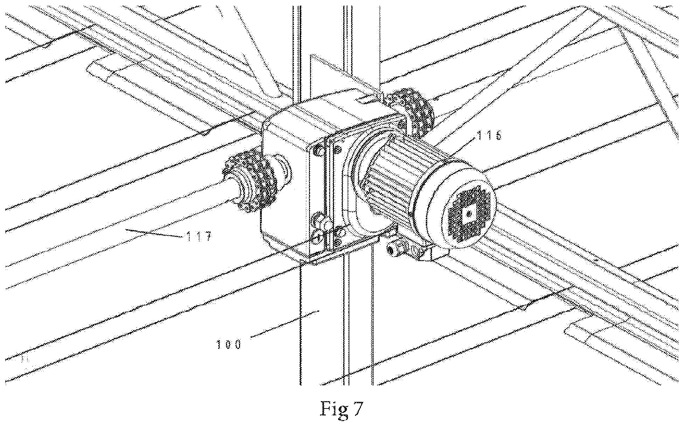

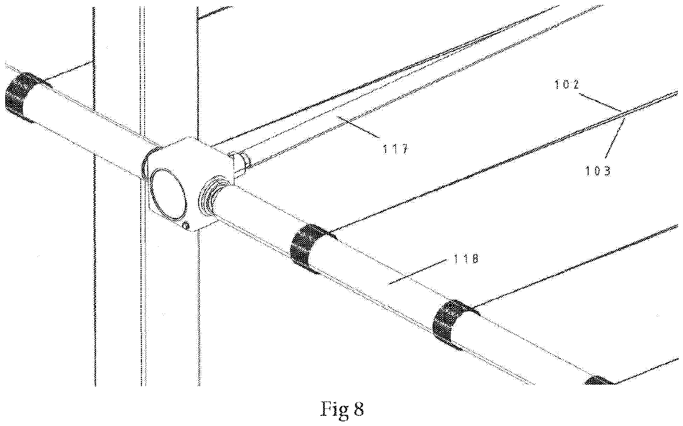

Figure 7 shows an upright 100 in which is shown a central motor 116 which drives a pair of shafts 118, which are placed at a distance from each other, by means of a transmission 117. One of these shafts 118 is shown in figure 8. The shafts are generally placed close to or on the outer wall of the greenhouse. While the one shaft unwinds the first and second wires, the other shaft winds these wires up at the same time.

Figure 8 shows how first wires 102 and second wires 103 are wound around a shaft 118. Shaft 118 performs here simultaneously a rotating and a translating movement so that it is possible to prevent first wires 102 and second wires 103 being wound too close to each other.

Using central motor 116 it is possible to achieve that one of the pair of shafts 118 unwinds first wires 102 and second wires 103 while the other shaft winds first wires 102 and second wires 103 up at the same time. Instead of central motor 116 use can also be made of two synchronized motors.

It will be apparent to the skilled person that the present disclosure is not limited to the exemplary embodiments shown here but that different modifications are possible. The scope of protection is defined by the appended claims.

## Claims

1. A greenhouse, comprising:
a frame comprising a plurality of uprights (100) and a plurality of transverse beams (101);
a screen system, comprising:
a first wire network comprising a plurality of first wires (102);
a second wire network comprising a plurality of second wires (103);
a sheet (106) extending between the first and second wire network, wherein the sheet is coupled on a first side to the frame;
a carrier (104) which is coupled to a second side of the sheet;
a drive system (116) for moving the carrier;
**characterized in that**
the carrier is coupled to one of said first wires and to one of said second wires, and that the drive system is configured to move the first wires and the second wires simultaneously in the same direction in order to thus collapse or pull out the sheet.

2. A greenhouse as claimed in claim 1, wherein the coupling between the carrier and one of said first wires and/or the coupling between the carrier and one of said second wires is a slipping connection or fixed connection, preferably a rigid or resilient connection.

3. A greenhouse as claimed in claim 1 or 2, wherein the first wires and the second wires respectively extend in a first and second plane, wherein the first and second wire network are configured to be attached to the frame at different heights and wherein the first and second plane are parallel planes, preferably horizontally extending planes;
wherein the first plane is preferably situated higher than the second plane and wherein an edge of the sheet is on the stated second side placed closer to the first plane than to the second plane.

4. A greenhouse as claimed in any of the foregoing claims, wherein the carrier extends substantially between the first and second wire.

5. A greenhouse as claimed in any of the foregoing claims, comprising a plurality of said carriers, which are each coupled to a different first and second wire on the second side of the sheet.

6. A greenhouse as claimed in any of the foregoing claims, wherein the screen system further comprises an edge profile (105) which is coupled to an edge of the sheet and to the carrier(s);
wherein the carrier preferably comprises coupling parts for coupling the edge profile to the first and second wires, wherein the coupling parts preferably comprise resilient elements.

7. A greenhouse as claimed in claim 6, wherein the coupling parts comprise first resilient elements (107') extending in a plane under and parallel to the first plane and wherein the coupling parts comprise second resilient elements (107") extending in a plane above and parallel to the second plane, wherein the first resilient elements are coupled to a first wire and wherein the second resilient elements are coupled to a second wire.

8. A greenhouse as claimed in claim 7, wherein the coupling parts further comprise a connecting part extending between the first and second resilient elements and coupled thereto and/or wherein the first and second resilient elements extend on either side of respectively a first or second connecting point, at which point the first or second resilient elements are coupled to respectively the first or second wire.

9. A greenhouse as claimed in any of the foregoing claims, wherein the drive system comprises a pair of shafts between which the first and second wires extend and to which shafts the first and second wires are connected, wherein the drive system is configured to rotate at least one shaft of the pair of shafts for said collapsing or pulling out.

10. A greenhouse as claimed in claim 9, wherein the drive system is configured to move every shaft simultaneously.

11. A greenhouse as claimed in claim 10, wherein the drive system comprises a central motor (116) and a transmission (117) from the central motor to each shaft (118) and/or wherein the drive system comprises a respective motor for each shaft, wherein the motors are configured to rotate the shafts in synchronized manner.

12. A greenhouse as claimed in any of the claims 9-11, wherein at least one shaft can translate in a longitudinal direction thereof;
wherein said at least one shaft is preferably configured to simultaneously translate and rotate.

13. A greenhouse as claimed in any of the foregoing claims, further comprising a frame mounting part (109) mounted on a transverse beam of the stated plurality of transverse beams, wherein the frame mounting part comprises on a side a first receptacle (110) for receiving the sheet, wherein the sheet is fixedly connected on the stated first side to the first receptacle, preferably close to an underside of the receptacle;
wherein the frame mounting part preferably comprises on an opposite side a second receptacle (113) for receiving the second side of a further sheet, and/or wherein the frame mounting part preferably comprises a downward extending guide (115) for guiding the sheet to the first receptacle during a collapsing movement of the sheet.

14. A greenhouse as claimed in any of the foregoing claims, wherein the screen system comprises a plurality of said sheets (106, 114), wherein each sheet is placed between a pair of adjacent transverse beams and/or wherein the greenhouse further comprises a gutter mounted on the frame for collecting rainwater, this gutter extending in a first direction, wherein the screen system is mounted with the first and second wires parallel to or perpendicularly of the first direction.

15. A screen system configured to be used with a greenhouse according to one of claims 1-14, comprising:
a first wire network comprising a plurality of first wires (102);
a second wire network comprising a plurality of second wires (103);
a sheet (106) extending between the first and second wire network, wherein the sheet is configured to be coupled on a first side to a frame of the greenhouse;
a carrier (104) which is coupled to a second side of the sheet;
a drive system (116) for moving the carrier;
**characterized in that**
the carrier is coupled to one of said first wires and to one of said second wires, and that the drive system is configured to move the first wires and the second wires simultaneously in the same direction in order to thus collapse or pull out the sheet.

## Patentansprüche

1. Gewächshaus, umfassend:
einen Rahmen, der eine Vielzahl von Stützen (100) und eine Vielzahl von Querträgern (101) umfasst;
ein Schirmsystem, umfassend:
ein erstes Drahtnetzwerk, das eine Vielzahl von ersten Drähten (102) umfasst;
ein zweites Drahtnetzwerk, das eine Vielzahl von zweiten Drähten (103) umfasst;
eine Folie (106), die sich zwischen dem ersten und zweiten Drahtnetzwerk erstreckt, wobei die Folie auf einer ersten Seite mit dem Rahmen gekoppelt ist;
einen Träger (104), der mit einer zweiten Seite der Folie gekoppelt ist; ein
Antriebssystem (116) zum Bewegen des Trägers;
**dadurch gekennzeichnet, dass** der Träger mit einem der ersten Drähte und mit einem der zweiten Drähte gekoppelt ist, und dass das Antriebssystem konfiguriert ist, um die ersten Drähte und die zweiten Drähte gleichzeitig in die gleiche Richtung zu bewegen, um so die Folie zusammenzuklappen oder herauszuziehen.

2. Gewächshaus nach Anspruch 1, bei dem die Verbindung zwischen dem Träger und einem der ersten Drähte und/oder die Verbindung zwischen dem Träger und einem der zweiten Drähte eine Rutschverbindung oder eine feste Verbindung, vorzugsweise eine starre oder elastische Verbindung ist.

3. Gewächshaus nach Anspruch 1 oder 2, bei dem sich die ersten Drähte und die zweiten Drähte jeweils in einer ersten und zweiten Ebene erstrecken, wobei das erste und zweite Drahtnetzwerk konfiguriert sind, um in unterschiedlichen Höhen am Rahmen befestigt zu sein, und wobei die erste und zweite Ebene parallele Ebenen, vorzugsweise horizontal verlaufende Ebenen sind;
wobei die erste Ebene vorzugsweise höher als die zweite Ebene liegt und wobei eine Kante der Folie auf der angegebenen zweiten Seite liegt, die näher an der ersten Ebene als an der zweiten Ebene angeordnet ist.

4. Gewächshaus nach einem der vorstehenden Ansprüche, bei dem sich der Träger im Wesentlichen zwischen dem ersten und zweiten Draht erstreckt.

5. Gewächshaus nach einem der vorstehenden Ansprüche, umfassend eine Vielzahl der Träger, die jeweils mit einem unterschiedlichen ersten und zweiten Draht auf der zweiten Seite der Folie verbunden sind.

6. Gewächshaus nach einem der vorstehenden Ansprüche, bei dem das Schirmsystem ferner ein Randprofil (105) umfasst, das mit einem Rand der Folie und mit dem/den Träger(n) gekoppelt ist;
wobei der Träger vorzugsweise Kupplungsteile zum Koppeln des Randprofils mit den ersten und zweiten Drähten umfasst, wobei die Kupplungsteile vorzugsweise elastische Elemente umfassen.

7. Gewächshaus nach Anspruch 6, bei dem die Kupplungsteile erste elastische Elemente (107') umfassen, die sich in einer Ebene unter und parallel zu der ersten Ebene erstrecken, und wobei die Kupplungsteile zweite elastische Elemente (107' ') umfassen, die sich in einer Ebene über und parallel zu der zweiten Ebene erstrecken, wobei die ersten elastischen Elemente mit einem ersten Draht gekoppelt sind und wobei die zweiten elastischen Elemente mit einem zweiten Draht gekoppelt sind.

8. Gewächshaus nach Anspruch 7, bei dem die Kupplungsteile ferner ein Verbindungsteil umfassen, das sich zwischen den ersten und zweiten elastischen Elementen erstreckt und mit diesen gekoppelt ist, und/oder wobei sich die ersten und zweiten elastischen Elemente auf beiden Seiten jeweils eines ersten oder zweiten Verbindungspunktes erstrecken, wobei an diesem Punkt die ersten oder zweiten elastischen Elemente jeweils mit dem ersten oder zweiten Draht gekoppelt sind.

9. Gewächshaus, nach einem der vorstehenden Ansprüche, bei dem das Antriebssystem ein Paar Wellen umfasst, zwischen denen sich die ersten und zweiten Drähte erstrecken und mit denen die ersten und zweiten Drähte verbunden sind, wobei das Antriebssystem konfiguriert ist, um mindestens eine Welle des Wellenpaares zum Zusammenklappen oder Herausziehen zu drehen.

10. Gewächshaus nach Anspruch 9, bei dem das Antriebssystem konfiguriert ist, um jede Welle gleichzeitig zu bewegen.

11. Gewächshaus nach Anspruch 10, bei dem das Antriebssystem einen Zentralmotor (116) und ein Getriebe (117) vom Zentralmotor zu jeder Welle (118) umfasst und/oder bei dem das Antriebssystem einen entsprechenden Motor für jede Welle umfasst, wobei die Motoren konfiguriert sind, um die Wellen synchron zu drehen.

12. Gewächshaus nach einem der Ansprüche 9 - 11, wobei mindestens eine Welle in Längsrichtung davon verschiebbar ist;
wobei die mindestens eine Welle vorzugsweise konfiguriert ist, um gleichzeitig zu übertragen und zu rotieren.

13. Gewächshaus, nach einem der vorstehenden Ansprüche, ferner umfassend ein Rahmenbefestigungsteil (109), das an einem Querträger der angegebenen Vielzahl von Querträgern montiert ist, wobei das Rahmenbefestigungsteil auf einer Seite eine erste Aufnahme (110) zur Aufnahme der Folie umfasst, wobei die Folie auf der angegebenen ersten Seite fest mit der ersten Aufnahme verbunden ist, vorzugsweise in der Nähe einer Unterseite der Aufnahme;
wobei das Rahmenbefestigungsteil vorzugsweise auf einer gegenüberliegenden Seite eine zweite Aufnahme (113) zur Aufnahme der zweiten Seite einer weiteren Folie umfasst, und/oder wobei das Rahmenbefestigungsteil vorzugsweise eine sich nach unten erstreckende Führung (115) zum Führen der Folie zur ersten Aufnahme während einer Zusammenklappbewegung der Folie umfasst.

14. Gewächshaus, nach einem der vorstehenden Ansprüche, wobei das Schirmsystem eine Vielzahl der Folien (106, 114) umfasst, wobei jede Folie zwischen einem Paar benachbarter Querträger angeordnet ist und/oder wobei das Gewächshaus ferner eine Rinne umfasst, die am Rahmen zum Sammeln von Regenwasser montiert ist, wobei sich diese Rinne in eine erste Richtung erstreckt, wobei das Schirmsystem mit dem ersten und zweiten Draht parallel oder senkrecht zur ersten Richtung montiert ist.

15. Schirmsystem, das konfiguriert ist, um mit einem Gewächshaus nach einem der Ansprüche 1-14 verwendet zu werden, umfassend:
ein erstes Drahtnetzwerk, das eine Vielzahl von ersten Drähten (102) umfasst;
ein zweites Drahtnetzwerk, das eine Vielzahl von zweiten Drähten (103) umfasst;
eine Folie (106), die sich zwischen dem ersten und zweiten Drahtnetzwerk erstreckt, wobei die Folie konfiguriert ist, um auf einer ersten Seite mit einem Rahmen des Gewächshauses gekoppelt zu werden;
einen Träger (104), der mit einer zweiten Seite des Blattes gekoppelt ist;
ein Antriebssystem (116) zum Bewegen des Trägers;
**dadurch gekennzeichnet, dass**
der Träger mit einem der ersten Drähte und einem der zweiten Drähte gekoppelt ist, und dass das Antriebssystem konfiguriert ist, um die ersten Drähte und die zweiten Drähte gleichzeitig in die gleiche Richtung zu bewegen, um so die Folie zusammenzufalten oder herauszuziehen.

## Revendications

1. Serre, comprenant :
un cadre comprenant une pluralité de montants (100) et une pluralité de poutres transversales (101) ;
un système d'écran, comprenant :
un premier réseau de câbles comprenant une pluralité de premiers câbles (102) ;
un second réseau de câbles comprenant une pluralité de seconds câbles (103) ;
une feuille (106) s'étendant entre les premier et second réseaux de câbles, dans laquelle la feuille est couplée au cadre sur un premier côté ;
un support (104) qui est couplé à un second côté de la feuille ;
un système d'entraînement (116) pour déplacer le support ;
**caractérisée en ce que**
le support est couplé à l'un desdits premiers câbles et à l'un desdits seconds câbles, et **en ce que** le système d'entraînement est configuré pour déplacer les premiers câbles et les seconds câbles simultanément dans la même direction afin d'ainsi replier ou retirer la feuille.

2. Serre selon la revendication 1, dans laquelle le couplage entre le support et l'un desdits premiers câbles et/ou le couplage entre le support et l'un desdits seconds câbles est un raccordement par glissement ou un raccordement fixe, de préférence un raccordement rigide ou élastique.

3. Serre selon la revendication 1 ou 2, dans laquelle les premiers câbles et les seconds câbles s'étendent respectivement dans des premier et second plans, dans laquelle les premier et second réseaux de câbles sont configurés pour être attachés au cadre à différentes hauteurs et dans laquelle les premier et second plans sont des plans parallèles, de préférence des plans s'étendant horizontalement ;
dans laquelle le premier plan est situé de préférence plus haut que le second plan et dans laquelle un bord de la feuille se trouve sur le second côté indiqué placé plus près du premier plan que du second plan.

4. Serre selon l'une quelconque des revendications précédentes, dans laquelle le support s'étend sensiblement entre les premier et second câbles.

5. Serre selon l'une quelconque des revendications précédentes, comprenant une pluralité desdits supports, qui sont couplés chacun à des premiers et seconds câbles différents sur le second côté de la feuille.

6. Serre selon l'une quelconque des revendications précédentes, dans laquelle le système d'écran comprend en outre un profilé de bord (105) qui est couplé à un bord de la feuille et au(x)support(s) ;
dans laquelle le support comprend de préférence des pièces de couplage pour coupler le profilé de bord aux premiers et seconds câbles, dans laquelle les pièces de couplage comprennent de préférence des éléments élastiques.

7. Serre selon la revendication 6, dans laquelle les pièces de couplage comprennent des premiers éléments élastiques (107') s'étendant dans un plan en dessous du et parallèle au premier plan et dans laquelle les pièces de couplage comprennent des seconds éléments élastiques (107") s'étendant dans un plan au-dessus du et parallèle au second plan, dans laquelle les premiers éléments élastiques sont couplés à un premier câble et dans laquelle les seconds éléments élastiques sont couplés à un second câble.

8. Serre selon la revendication 7, dans laquelle les pièces de couplage comprennent en outre une pièce de raccordement s'étendant entre les premiers et seconds éléments élastiques et couplée à ceux-ci et/ou dans laquelle les premiers et seconds éléments élastiques s'étendent respectivement sur chaque côté de d'un premier ou d'un second point de raccordement, auquel point les premiers ou seconds éléments élastiques sont couplés respectivement au premier ou au second câble.

9. Serre selon l'une quelconque des revendications précédentes, dans laquelle le système d'entraînement comprend une paire d'arbres entre lesquels s'étendent les premiers et seconds câbles et auxquels arbres les premiers et seconds câbles sont raccordés, dans laquelle le système d'entraînement est configuré pour faire tourner au moins un arbre de la paire d'arbres pour ledit repliement ou retrait.

10. Serre selon la revendication 9, dans laquelle le système d'entraînement est configuré pour déplacer chaque arbre simultanément.

11. Serre selon la revendication 10, dans laquelle le système d'entraînement comprend un moteur central (116) et une transmission (117) du moteur central à chaque arbre (118) et/ou dans laquelle le système d'entraînement comprend un moteur respectif pour chaque arbre, dans laquelle les moteurs sont configurés pour faire tourner les arbres de manière synchronisée.

12. Serre selon l'une quelconque des revendications 9 à 11, dans laquelle au moins un arbre peut effectuer une translation dans une direction longitudinale de celle-ci ;
dans laquelle ledit au moins un arbre est configuré de préférence pour effectuer une translation et tourner simultanément.

13. Serre selon l'une quelconque des revendications précédentes, comprenant en outre une pièce de montage de cadre (109) montée sur une poutre transversale de la pluralité de poutres transversales indiquées, dans laquelle la pièce de montage de cadre comprend sur un côté un premier réceptacle (110) pour recevoir la feuille, dans laquelle la feuille est raccordée de manière fixe au premier réceptacle sur le premier côté indiqué, de préférence près d'un côté inférieur du réceptacle ;
dans laquelle la pièce de montage de cadre comprend de préférence sur un côté opposé un second réceptacle (113) pour recevoir le second côté d'une feuille supplémentaire, et/ou dans laquelle la pièce de montage de cadre comprend de préférence un guide s'étendant vers le bas (115) pour guider la feuille au premier réceptacle pendant un mouvement de repliement de la feuille.

14. Serre selon l'une quelconque des revendications précédentes, dans laquelle le système d'écran comprend une pluralité desdites feuilles (106, 114), dans laquelle chaque feuille est placée entre une paire de poutres transversales adjacentes et/ou dans laquelle la serre comprend en outre une gouttière montée sur le cadre pour recueillir l'eau de pluie, cette gouttière s'étendant dans une première direction, dans laquelle le système d'écran est monté avec les premiers et seconds câbles parallèlement ou perpendiculairement à la première direction.

15. Système d'écran configuré pour être utilisé avec une serre selon l'une quelconque des revendications 1 à 14 comprenant :
un premier réseau de câbles comprenant une pluralité de premiers câbles (102) ;
un second réseau de câbles comprenant une pluralité de seconds câbles (103) ;
une feuille (106) s'étendant entre les premiers et seconds réseaux de câbles, dans lequel la feuille est configurée pour être couplée à un cadre de la serre sur un premier côté ;
un support (104) qui est couplé à un second côté de la feuille ;
un système d'entraînement (116) pour déplacer le support ;
**caractérisé en ce que**
le support est couplé à l'un desdits premiers câbles et à l'un desdits seconds câbles, et **en ce que** le système d'entraînement est configuré pour déplacer les premiers câbles et les seconds câbles simultanément dans la même direction afin d'ainsi replier ou retirer la feuille.
